(19) Europäisches Patentamt

European Patent Office

Office européen des brevets

(11) **EP 3 382 938 A1**

(12) **EUROPEAN PATENT APPLICATION**

(43) Date of publication:
**03.10.2018 Bulletin 2018/40**

(51) Int Cl.:
***H04L 12/24*** *(2006.01)*

(21) Application number: **17382163.8**

(22) Date of filing: **31.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Telefonica Digital España, S.L.U.**
**28013 Madrid (ES)**

(72) Inventors:
• **Serrà Julià, Joan**
 **28013 Madrid (ES)**
• **Leontiadis, Ilias**
 **28013 Madrid (ES)**

(74) Representative: **Carlos Hernando, Borja**
 **Garrigues IP, S.L.P.**
 **Hermosilla, 3**
 **28001 Madrid (ES)**

(54) **A COMPUTER IMPLEMENTED METHOD, A SYSTEM AND COMPUTER PROGRAMS TO FORECAST THE PERFORMANCE OF A NETWORK**

(57) The method comprising: collecting different KPIs from network radio access elements of a network comprising different sectors, said different KPIs being periodically collected every certain period of time during a specific first time range at a sector level of said network; computing a score to obtain a status of each sector of said different sectors of the network during each of said certain periods of time in which the KPIs have been periodically collected using the collected KPIs; assigning a label to each sector if the computed score is above a threshold; and forecasting a future performance of each sector of the network during a specific time horizon by executing a forecasting algorithm that uses the collected KPIs, the computed score, the assigned label or labels and a timestamp concerning the collected KPIs.

**Fig. 1**

## Description

Field of the art

The present invention is directed, in general, to the field of network measurements. In particular, the invention relates to a computer implemented method, a system and computer programs to forecast the performance of a network.

Background of the invention

The performance of a cellular network is dynamic; it changes with time, affected by internal and external factors, including hardware and software failures, human behavior, weather conditions, and seasonal changes. Operators make huge investments to accurately monitor and understand performance dynamics, as they are key to cellular networks' management, planning, and optimization. Operators rely on a set of equipment measurements that provide detailed performance information: the so-called Key Performance Indicators (KPIs). KPIs provide insights about each network sector over a certain time window, typically on the order of minutes or hours. They can be categorized into three broad classes: signaling and coverage monitoring, voice-related measurements, and data-related metrics.

Monitoring the performance of the network can be a complex task, as there are typically hundreds of thousands of sectors providing tens of different KPIs at a constant (almost instantaneous) rate. To facilitate their analysis, operators combine the available KPIs into a single metric that, besides capturing the overall sectors' "health", can be used to rank them based on their performance over time. By ranking sectors, operators have an objective way to prioritize intervention and to inform planning and investment decisions. To simplify things further, operators typically only consider so-called "hotspots": sectors that are at the top of the ranking and, thus, clearly underperform. The methodology to combine KPIs into a single metric and the threshold to determine hot spots has been established over the years, through a collective effort of vendors and the industry, based on domain knowledge, logical decisions, service level agreements, and controlled experiments.

A. Nika et al. [2], discloses a methodology for understanding data hotspots in cellular networks where a data set with more than 700K users is analyzed to understand temporal characteristics of data hotspots. Predictability is assessed, but considering only hotspot repetitions at the exact time and location in the forthcoming week. However, the focus of this work is not on performance, but on load, with hotspots being defined on the basis of relative daily cell traffic.

A few further research papers have been written in an attempt to understand how load evolves in cellular networks. For instance, Paul et al. [3] analyzed the spatio-temporal behavior of network resource usage in a real 3G network. Interestingly, their results indicate that aggregate network usage exhibits periodic behavior, but individual sectors do not exhibit such properties (however, Jiang et al. [1] do find such correlations in KPIs). Vela et al. [4] also studied the periodic fluctuations in cellular network loads, and built a simple model based on ARIMA to perform some prediction. Finally, simulation has been also used to quantify hotspots in wireless cellular networks. None of the previous works however considers real performance hotspots nor provides any forecasting methodology.

In terms of forecasting, over the past years, there have been some attempts to predict network performance based on historical network measurements. The network weather service (Wolski [6]) was one of the first systems to make predictions of TCP/IP throughput and latency. Another example is the Proteus (Xu et al. [7]) system, which uses regression trees to forecast short-term performance in cellular networks, with the objective to proactively adapt mobile application network patterns. Similarly, Sprout (Winstein et al. [5]) attempts to predict immediate network load in cellular networks to optimize TCP-layer parameters. Finally, other works use gradient boosted trees to forecast hot spots within a data center, in order to avoid stranglers and, therefore, speed up map-reduce computation. In general, all these works focus on very short-term forecasts (in the order of seconds or, at most, minutes) and, consequently, they consider data sets spanning only very short time periods. Further approaches are either not applied to cellular networks or do not consider performance hot spots.

New solutions to perform forecasts of cellular network hotspots in the midterm are therefore needed.

References

[1] N. Jiang, G. Jiang, H. Chen, and K. Yoshihira. Correlating real-time monitoring data for mobile network management. In Proc. of the Int. Symp. on a World of Wireless, Mobile and Multimedia Networks (WoWMoM), pages 1-8, 2008.

[2] A. Nika, A. Ismail, B. Y. Zhao, S. Gaito, G. P. Rossi, and H. Zheng. Understanding data hotspots in cellular networks. In Proc. of the Int. Conf. on Heterogeneous Networking for Quality, Reliability, Security and Robustness (QShine), pages 70-76, 2014.

[3] U. Paul, A. P. Subramanian, M. M. Buddhikot, and S. R. Das. Understanding traffic dynamics in cellular data networks. In Proc. of the IEEE INFOCOM, pages 882-890, 2011.

[4] M. Vela, M. Shannon Irizarry, & N. Saxena. Detecting and processing anomalous parameter data points by a mobile wireless data network forecasting system. US Patent US20140111517 A1, 2012.

[5] K. Winstein, A. Sivaraman, and H. Balakrishnan. Stochastic forecasts achieve high throughput and low delay over cellular networks. In Proc. of the USENIX Symp. on Networked Systems Design and Implementation (NSDI), pages 459-471, 2013.

[6] R. Wolski. Forecasting network performance to support dynamic scheduling using the network weather service. In Proc. of the Int. Symp. On High Performance Distributed Computing (HPDC), pages 316-325, 1997.

[7] Q. Xu, S. Mehrotra, Z. M. Mao, and J. Li. PROTEUS: Network performance forecast for real-time, interactive mobile applications. In Proc. of the ACM Int. Conf. in Mobile Systems, Applications, and Services (MobiSys), pages 347-360, 2013.

Summary of the Invention

Embodiments of the present invention provide according to a first aspect a computer implemented method to forecast the performance of a network, the method comprising collecting different Key Performance Indicators (KPIs) from network radio access elements of a network comprising different sectors, said different KPIs being periodically collected every certain period of time during a specific first time range at a sector level of said network; computing a score to obtain a status of each sector of said different sectors of the network during each of said certain periods of time in which the KPIs have been periodically collected using the collected KPIs; assigning a label to each sector if the computed score is above a threshold; and forecasting a future performance of each sector of the network during a specific time horizon by executing a forecasting algorithm that uses the collected KPIs, the computed score, the assigned label or labels and a timestamp concerning the collected KPIs.

The timestamp preferably includes information about the hour of the day, the day of the week, the day of the month, if it is a weekend, and if it is a holiday where the KPIs were collected.

According to the proposed method, said certain period of time in which the KPIs are periodically collected and the specific time horizon in which the future performance is forecasted are configurable.

In an embodiment, the collecting steps further comprises executing a sector filtering operation that checks whether the different sectors of the network comprise missing KPIs; discarding a sector if it has more than 50% of missing values in a specific second time range; and using a multi-layer neural network on those sectors that have not been discarded to input KPI missing values to said sectors.

In a preferred embodiment, the collected KPIs are grouped in different groups including a coverage group, an accessibility group, a retainability group, a mobility group and an availability and congestion group, before the score being computed.

The collected KPIs in an embodiment are stored in a memory or database.

Moreover, in an embodiment, the forecasting algorithm comprises a machine learning model based on a classification and regression tree. Alternatively, in another embodiment, the forecasting algorithm comprises a random forest classifier algorithm. In this latter case, the algorithm may further use percentile features or a standard deviation, mean, minimum and maximum of the past KPIs. Furthermore, Fourier transforms of the collected KPIs and their coefficients and/or features from only part or subsequences of the collected KPIs may also be used.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The performance of forecasts of cellular network hotspots in the midterm brings a number of advantages:

- As investment plans are finalized weeks in advance, forecasting future demands would allow operators to optimize capex spending.

- Short-term forecasting would allow operators to proactively troubleshoot their network.

- It would also allow to dynamically balancing resources as an input to self-organizing networks.

Present invention, by using trees and random forests algorithms allows a fast forecasting of the network performance. In the invention experiments it took less than 1 minute to perform a forecast for around 40000 sectors.

In addition, trees and random forests do not need pre-normalizations of the input data and can be directly applied to data lying on different scales. They are very flexible models.

Missing value imputation via deep stacking autoencoder proves to be efficient (at imputation time) and reliable (capturing periodic as well as peak oscillations present in the data surrounding a missing value).

The invention exploits KPI information, but also derived hotspot scores and hotspot labels.

Brief Description of the Drawings

The previous and other advantages and features will be more deeply understood from the following detailed description of embodiments, with reference to the attached figures, which must be considered in an illustrative and non-limiting manner, in which:

Fig. 1 is a schematic illustration of the workflow of the proposed method to forecast the performance of a network according to an embodiment.

Fig. 2 illustrates an example of a voice-based (A) and a data-based (B) KPI. The sector in (B) is close to a commercial area, and the strong peak appears in the afternoon of popular shopping day.

Fig. 3 is an example of a sector's score $S_{i,:}^{d}$ (A) and its binary hotspot label $Y_{i,:}^{d}$ (B). Shadowed regions correspond to weekends or holidays.

Fig. 4 illustrates examples of hotspot labels $Y^d$ for 500 randomly selected sectors. Black dots correspond to hotspots.

Fig. 5 is a schematic illustration of the workflow of the proposed method to forecast the performance of a network when missing KPIs values are inputted according to an embodiment.

Detailed Description of the Invention and of Several Embodiments

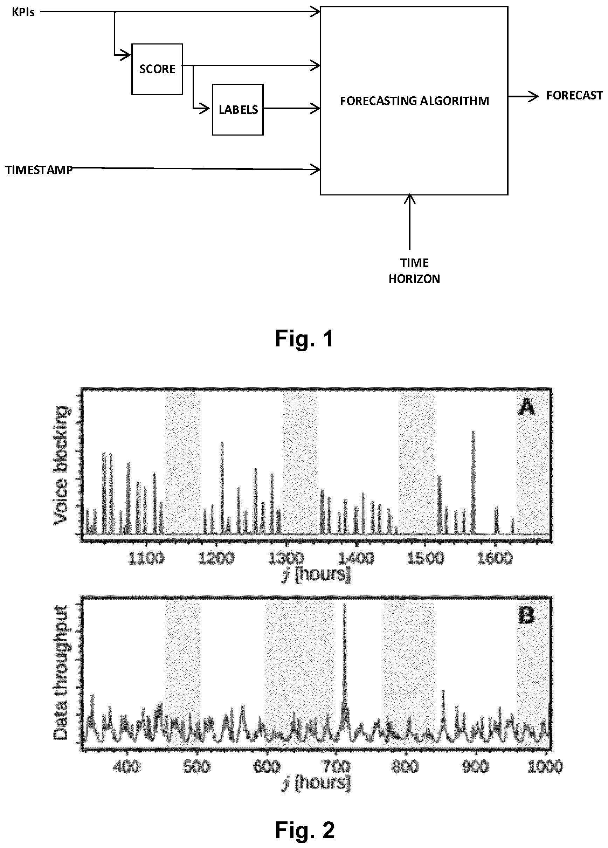

Fig. 1 shows the basic workflow of inputs and outputs followed by the present invention. The inputs used by the proposed method are KPIs and timestamps. Internally computed quantities are scores and labels. The output is the forecast of the future performance of each sector of the network. That is, the proposed method, from network sectors measures different KPIs, computes scores and labels, and performs a hotspot forecast. This forecast is used to know in advance future problematic sectors.

Data input.-

A set of real-world KPIs collected by a network operator are used. According to an embodiment the employed KPIs correspond to 3G sectors, and are selected based on both internal knowledge and vendors' recommendations. Besides, the KPIs can be also grouped into the following classes: coverage (e.g., radio interference, noise level, power characteristics), accessibility (e.g., success establishing a voice or data channel, paging success, allocation of high-speed data channels), retainability (e.g., fraction of abnormally dropped channels), mobility (e.g., handovers' success ratio), availability and congestion (e.g., number of transmission time intervals, number of queued users waiting for a resource, congestion ratios, free channels available). It is important to underline that the data set captures the network at scale, that is, all 3G sectors and all customers observed.

In a particular exemplary embodiment of the proposed method, 21 KPIs for over 40000 sectors of a network were used. In this particular embodiment, KPIs were measured hourly (not limitative as this period of time is configurable, for instance in other embodiments it can be set to 10 min or even to 1 day, among others) for a time range (or first time range as termed in the claims) of 4 months (not limitative either as this range is also configurable). These KPIs are represented as a three-dimensional tensor K, whose elements $K_{i,j,k}$ correspond to the i-th sector, j-th time sample, and k-th indicator. Examples of KPIs are shown in Fig. 2.

Besides KPIs, the invention also considers the (hotspot) score used by the network operator, past labels, and a timestamp that can provide enriched calendar information. Preferably, the latter consists of 5 different variables reflecting the hour of the day, the day of the week, the day of the month, if it is a weekend, and if it is a holiday.

The computation of the score (S) is as follows. From the collected KPIs K, the network operator (via a computer system) computes a score that acts as the main and only measure of "hotness" (or "poor health"), and which can be used to rank sectors based on their performance. Specifically, a weighted sum of thresholded indicators is used:

$$S'_{i,j} = \sum_{k=1}^{d} \Omega_k H\left(\mathcal{K}_{i,j,k} - \varepsilon_k\right),$$

where H is the Heaviside step function, and Omega and Epsilon are sets of carefully defined weights and thresholds, respectively. Those have been set and refined over the years, according to the vendor's information and the operator's experience, in order to fulfill management and maintenance needs.

In order to further simplify the analysis of underperforming sectors, the network operator also performs an explicit label (Y) designation. A sector $i$ is defined as a hotspot at a given time step $j$ if $S_{i,j}$ is above an empirically chosen threshold:

$$\mathbf{Y}_{i,j} = H(\mathbf{S}_{i,j} - \epsilon).$$

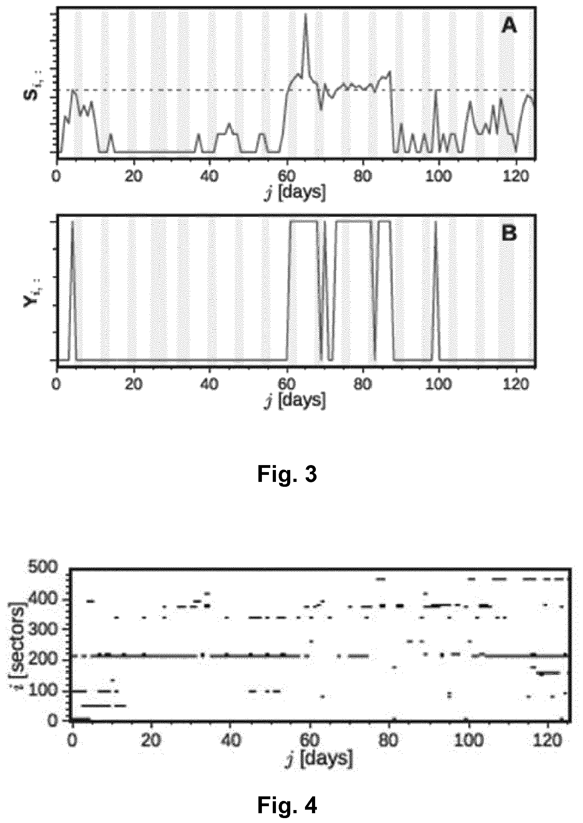

The result is a binary signal $Y_{i,j}$ denoting whether a sector $i$ is a hotspot or not at a given time frame $j$. The choice of the appropriate threshold is based on the network operator's best practice, but can also be partially justified from the empirical distribution of the computed score. Examples of score and labels are shown in Figs. 3 and 4.

Dealing with missing values.-

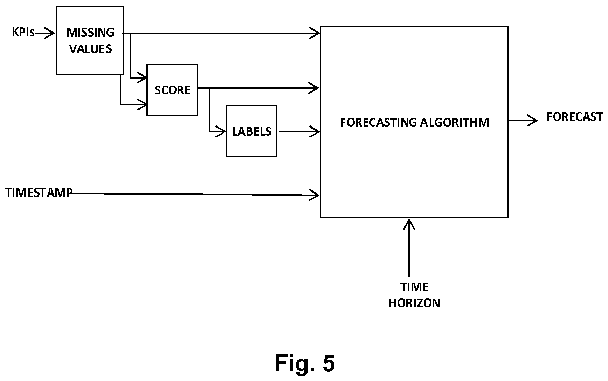

Referring to Fig. 5, and because sometimes it may happen that KPIs are not always present for every sector, hour, and indicator, due to multiple reasons, including the cases where the site was offline, the backbone was congested (priority is given to customer's data), the collection server was congested, or the probes have malfunctioned, the proposed method, according to an embodiment, proposes a methodology to deal with this missing values. Firstly, a sector filtering operation is executed; discarding a sector $i$ if it has more than 50% of missing values in a specific second time range (for instance one or more weeks). With the validation data, this filtering operation discards around 10% of the sectors, yielding still around 40000 sectors. The number of missing values after filtering represents around 4% of the data.

With the remaining sectors, a missing value imputation is performed, preferably, on a weekly basis. For that purpose, a multi-layer neural network is used. More preferably, a stacked denoising autoencoder is used. An autoencoder is a multi-layer neural network that is trained to attempt to replicate its input at its output, typically performing an implicit dimensionality reduction in the inner layers so that it does not learn the identity function but some structural features of the data. A denoising autoencoder goes one step further and tries to reconstruct a corrupted input signal to its original, uncorrupted version. This schema can be directly used for missing value imputation: the proposed method can input signals with (artificially introduced) missing values and train the autoencoder to minimize the error between the reconstructed signal and the original input.

According to an embodiment, a four-layer encoder and its symmetric decoder were considered. The encoder layers are dense layers of half of the size of their input, with parametric rectified linear units as activation functions. Batches of 128 randomly chosen subsequences were formed, each of them corresponding to a one week slice over all indicators. At the encoder input, the missing values of every subsequence were substituted by the first available previous time sample. The remaining non-missing values up to half of the slice size were also substituted by the first available previous time sample. As loss function the mean squared error between the real input and the reconstruction was used, considering only the originally non-missing values. After some experimentation, the autoencoder was trained using RMSprop for 1000 epochs, using a learning rate of $10^{-4}$ and a smoothing factor of 0.99. Z-normalization was applied for each KPI before imputation, and the original offsets and scales were restored afterwards.

Forecasting method.-

According to an embodiment, let $t$ be the current day and $h>=1$ the desired prediction time horizon, that is, how many days (or months) into the future the method wants to perform the forecast. Moreover, preferably a temporal window $w>=1$ from which the method is going to get the input variables is also defined. The introduction of this temporal window has a threefold motivation. Firstly, the more into the past the input values lie, the less likely it is to help in a reliable forecast. This intuitive statement has been formally confirmed in the literature for uncountable scenarios and information sources. Secondly, machine learning algorithms can suffer with an unreasonably high dimensionality, which can hamper their accuracy and interpretability. Thirdly, the method does not dispose of infinite data, and part of it has to be saved for testing/evaluation purposes.

With $t$, $h$, and $w$, the prediction variable can be formulated as follow:

$$\hat{Y}_{i,t+h} = F\left(\mathcal{X}_{i,t-w:t,:}\right),$$

where $F$ represents a forecasting model that outputs $Y_{i,t+h}$, the probability of being a hotspot at time horizon $h$ (i.e., $h$ days ahead of today, denoted by $t$). The input of the model is $X_{i,t-w:t,:}$, the slice over sector $i$, the previous temporal window $w$, and all input variables.

At training time, the method however only disposes of data until today ($t$). Therefore, the training of the model $F$ needs to be done with the corresponding $h$ times delayed slice $X_{i,t-h-w:t-h,:}$. Moreover, the binary label $Y_{i,t}$ computed before is also used. With that,

$$Y_{i,t} = F\left(\mathcal{X}_{i,t-h-w:t-h,:}\right).$$

Therefore, the setting corresponds to a typical classification task where models are trained with binary outputs but provide real-valued probabilities as forecast.

Forecasting models.-

Not all machine learning models are able to deal with a large number of instances and heterogeneous features of different scales and distributions, which corresponds to the situation the method faces with KPIs. One of the models that fulfill such requirements is the classification and regression tree. Therefore, according to an embodiment, a classification and regression tree model is used. Classification trees could be regarded as the "off-the-shelf" procedure for classification, as they are invariant under scaling and other feature transformations, robust to the inclusion of irrelevant features, and produce interpretable models. They perform a recursive partitioning of the training set until; ideally, elements of the same label or class predominate in a partition. There are several stopping criteria for the partitioning, as well as metrics to evaluate the best split point and feature. The proposed method preferably uses the Gini coefficient as the tree split metric, and evaluates a random subset of 80% of the features at every partition of the tree. Sample weights are balanced by multiplying by the inverse of the class frequency, and a 2% of the total weight is used as a criterion to stop the partitioning of the tree.

It is well known however that classification and regression trees present a series of limitations, including local optimality effects and poor generalization capabilities. To overcome some of those limitations, an ensemble of trees can be built, and predictions can be aggregated to reduce local optimality and improve generalization. A classical approach to that is a random forest model. Random forests train a number of trees on randomized subsets of the available instances, using also a randomized subset of the features at each tree partition. Predictions can then be performed by, for instance, aggregating the class probabilities computed for each tree in a so-called bootstrap aggregating or bagging schema. The proposed method uses the previous specifications for trees, with the same balancing strategy and split metric. However, at every partition, it now only evaluates a random subset of the features whose size cannot exceed the square root of the total number of input features. In addition, the method builds much deeper trees by considering 0.02% of the total weight as the criterion to stop the partitioning of a tree. It is demonstrated that random forests can use deep decision trees without the risk of overfitting to the training data. Random forests lose a little bit of the interpretability of trees but, nonetheless, can be used to derive feature importances in an intuitive way. The input features for the random forest is the raw slice $X_{:,j-w:j,:}$, where $j=t-h$ for training and $j=t$ for forecasting (see equations above).

Moreover, a random forest with percentile features can be also used. Despite the generalization and feature selection capabilities of a machine learning algorithm, it is well known that the total number and the quality of such features are crucial to obtain accurate predictions. Therefore, to improve both aspects in the forecasting task, the content of the data before being input to the random forest classifier is summarized. In the first attempt to achieve that, the method constructs $w$ daily percentile estimators from input time series $X_{:,j-w:j,:}$. For instance, according to an embodiment, 5, 25, 50, 75, and 95 percentiles of every day are used.

Furthermore, a random forest with hand-crafted features can be also used. A set of hand-crafted features computed from the slice $X_{:,j-w:j,:}$ are considered. The method can consider the mean, standard deviation, minimum, and maximum of the whole time series $X_{i,j-w:j,k}$, its first half, $X_{i,j-w:j-w/2,k}$, and its second half, $X_{i,j-w/2:j,k}$. The method can also consider the differences between the quantities derived for the two previous halves. In addition, the method can compute average day and week profiles found in the whole time series, and a set of differences between some of the obtained average components. The method can also compute what it's called "extreme" day and week profiles, by accumulating minimum and maximum values on an hourly and daily basis, respectively. Finally, the method can include the raw values for the 24 hours of the last day, plus the mean and standard deviation of those. In alternative embodiments, more feature combinations can be extracted, like products between features, Fourier transforms of KPI time series and their coefficients, extracting features from only part or subsequences of the KPIs, etc.

Besides the above described embodiments of the forecasting models, alternative classifiers and machine learning models can be also considered, such as support vector machines, deep neural networks or linear classification models like logistic regression.

Evaluation

Evaluation is performed with aforementioned probabilities and binary variables of the labels. In essence, the object is to obtain a ranking of the available sectors using the probabilities (largest values first), where topmost sectors correspond to the true hotspot sectors. This corresponds to a classical information retrieval task where relevant documents to a given query need to be ranked first in the provided answer. Thus, classical and well-known information retrieval measures can be used. In particular, the method works with precision-recall curves and the average precision measure. However, as both are sensitive to the number of positive instances, and therefore could give a rough estimate of the total number of hotspots, the method preferably here reports lift values relative to random performance. In fact, because of such sensitivity, both measures are always assessed with respect to random performance.

The lift of a model $F^i$ over the random model $F^0$ is defined as

$$\Lambda^i = \frac{\psi(F^i)}{\psi(F^0)},$$

where the numerator represents the average precision of model being evaluated and the denominator the average precision of the baseline random model. Note that a lift of 1 indicates close to random performance, and that a lift of g implies a performance that is g times better than random. The method will compute lift values for every $t$, $h$, $w$, and model combination, and report results based on different statistics across subsets of the four variables. Apart from lift from random, the method will also report differences between any two models $F^i$ and $F^j$ in a relative way, using ratio percentages as computed by

$$\Delta^{ij} = 100 \left( \frac{\Lambda^j}{\Lambda^i} - 1 \right).$$

The accuracy of the forecasts was studied in two situations: daily hotspots and emerging persistent hotspots. Accuracy was evaluated as a function of time, prediction horizon, and amount of considered past information. Firstly, it was seen that the time of the forecast does not significantly affect the results. Thus, it can safely be assumed that there is no important variability of the results with respect to *t*. Secondly, it was seen that forecast accuracy reaches a plateau when more than one week of past information is considered. In particular it was seen that the considered models can outperform the best baseline model by 14% on daily hotspots and by 153% on emerging hotspots.

The importance of KPIs for forecasting was also analyzed and showed that the most important features are the preceding hotspot scores. However, it was also seen that usage- and congestion-related KPIs have a non-negligible contribution. Such contribution increases for emerging persistent hotspots.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

**Claims**

1. A computer implemented method to forecast the performance of a network, the method comprising:

   a) collecting different Key Performance Indicators, or KPIs, from network radio access elements of a network comprising different sectors, said different KPIs being periodically collected every certain period of time during a specific first time range at a sector level of said network;
   b) computing a score to obtain a status of each sector of said different sectors of the network during each of said certain periods of time in which the KPIs have been periodically collected using the collected KPIs;
   c) assigning a label to each sector if the computed score is above a threshold; and
   d) forecasting a future performance of each sector of the network during a specific time horizon by executing a forecasting algorithm that uses the collected KPIs, the computed score, the assigned label or labels and a timestamp concerning the collected KPIs.

2. The method of claim 1, wherein said step a) further comprises:

   executing a sector filtering operation that checks whether the different sectors of the network comprise missing KPIs;
   discarding a sector if it has more than 50% of missing values in a specific second time range; and
   using a multi-layer neural network on those sectors that have not been discarded to input KPI missing values to said sectors.

3. The method of any of previous claims, wherein said collected KPIs being grouped in different groups including a coverage group, an accessibility group, a retainability group, a mobility group and an availability and congestion group.

4. The method of any of previous claims, further comprising storing in a memory or database the collected KPIs.

5. The method of claim 4, wherein the forecasting algorithm comprises a machine learning model based on a classification and regression tree.

6. The method of claim 4, wherein the forecasting algorithm comprises a random forest classifier algorithm.

7. The method of claim 6, further comprising using percentile features or a standard deviation, mean, minimum and maximum of the past KPIs.

8. The method of claim 7, further comprising using Fourier transforms of the collected KPIs and their coefficients and/or extracting features from only part or subsequences of the collected KPIs.

9. The method of claim 1, wherein said timestamp includes information about the hour of the day, the day of the week, the day of the month, if it is a weekend, and if it is a holiday where the KPIs were collected.

10. The method of claim 1, wherein said certain period of time in which the KPIs are periodically collected is configurable.

11. The method of claim 1, wherein the specific time horizon in which the future performance is forecasted is configurable.

12. A system to forecast the performance of a network, comprising:

a memory; and
at least one processor,
wherein said at least one processor being adapted and configured to perform the following steps:

compute a score to obtain a status of each sector of a network using different Key Performance Indicators, or KPIs, previously collected from network radio access elements of said network,

wherein said different KPIs being periodically collected every certain period of time during a specific first time range per sector of said network and wherein said score being computed during each of said certain periods of time in which the KPIs have been periodically collected;

assign a label to each sector if the computed score is above a threshold; and
forecast a future performance of each sector of the network during a specific time horizon by executing a forecasting algorithm that uses the collected KPIs, the computed score, the assigned label or labels and a timestamp concerning the collected KPIs.

13. A computer program product tangibly embodied in a non-transitory machine-readable storage medium including code instructions that, when executed by at least one processor of a computer system implements the method of any of previous claims 1 to 11.

**Fig. 1**

**Fig. 2**

**Fig. 3**

**Fig. 4**

**Fig. 5**

Europäisches
Patentamt
European
Patent Office
Office européen
des brevets

# EUROPEAN SEARCH REPORT

**Application Number**

EP 17 38 2163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 750 432 A1 (TELEFÓNICA S A [ES]) 2 July 2014 (2014-07-02) | 1,12,13 | INV. H04L12/24 |
| Y | * paragraphs [0004] - [0012], [0016], [0025] - [0033], [0055] - [0060]; claims; figures * | 2-11 | |
| X | US 9 439 081 B1 (KNEBL MATTHEW BRIAN [US] ET AL) 6 September 2016 (2016-09-06) | 1,12,13 | |
| Y | * column 1, line 40 - column 2, line 38 * <br> * column 4, line 47 - column 5, line 21 * <br> * column 6, line 20 - line 61 * <br> * column 8, line 55 - column 9, line 42; claims; figures * | 2-11 | |
| Y | US 2002/049687 A1 (HELSPER DAVID [US] ET AL) 25 April 2002 (2002-04-25) <br> * paragraphs [0002], [0016] - [0018], [0038], [0039], [0048], [0068] - [0070]; claims; figures * | 2-11 | |
| A,D | NIKA ANA ET AL: "Understanding data hotspots in cellular networks", 10TH INTERNATIONAL CONFERENCE ON HETEROGENEOUS NETWORKING FOR QUALITY, RELIABILITY, SECURITY AND ROBUSTNESS, ICST, 18 August 2014 (2014-08-18), pages 70-76, XP032664617, DOI: 10.1109/QSHINE.2014.6928662 [retrieved on 2014-10-17] * the whole document * | 1-13 | TECHNICAL FIELDS SEARCHED (IPC) <br><br> H04L |

The present search report has been drawn up for all claims

| Place of search | Date of completion of the search | Examiner |
|---|---|---|
| Munich | 21 July 2017 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 38 2163

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2017

| Patent document cited in search report | | Publication date | Patent family member(s) | | Publication date |
|---|---|---|---|---|---|
| EP 2750432 | A1 | 02-07-2014 | EP<br>WO | 2750432 A1<br>2014102318 A1 | 02-07-2014<br>03-07-2014 |
| US 9439081 | B1 | 06-09-2016 | NONE | | |
| US 2002049687 | A1 | 25-04-2002 | NONE | | |

EPO FORM P0459

For more details about this annex : see Official Journal of the European Patent Office, No. 12/82

## REFERENCES CITED IN THE DESCRIPTION

**Patent documents cited in the description**

- US 20140111517 A1

**Non-patent literature cited in the description**

- **N. JIANG ; G. JIANG ; H. CHEN ; K. YOSHIHIRA.** Correlating real-time monitoring data for mobile network management. *In Proc. of the Int. Symp. on a World of Wireless, Mobile and Multimedia Networks (WoWMoM),* 2008, 1-8
- **A. NIKA ; A. ISMAIL ; B. Y. ZHAO ; S. GAITO ; G. P. ROSSI ; H. ZHENG.** Understanding data hotspots in cellular networks. *Proc. of the Int. Conf. on Heterogeneous Networking for Quality, Reliability, Security and Robustness (QShine),* 2014, 70-76
- **U. PAUL ; A. P. SUBRAMANIAN ; M. M. BUDDHIKOT ; S. R. DAS.** Understanding traffic dynamics in cellular data networks. *In Proc. of the IEEE INFOCOM,* 2011, 882-890
- **K. WINSTEIN ; A. SIVARAMAN ; H. BALAKRISHNAN.** Stochastic forecasts achieve high throughput and low delay over cellular networks. *In Proc. of the USENIX Symp. on Networked Systems Design and Implementation (NSDI),* 2013, 459-471
- **R. WOLSKI.** Forecasting network performance to support dynamic scheduling using the network weather service. *In Proc. of the Int. Symp. On High Performance Distributed Computing (HPDC),* 1997, 316-325
- **Q. XU ; S. MEHROTRA ; Z. M. MAO ; J. LI.** PROTEUS: Network performance forecast for real-time, interactive mobile applications. *In Proc. of the ACM Int. Conf. in Mobile Systems, Applications, and Services (MobiSys),* 2013, 347-360